# EUROPEAN PATENT SPECIFICATION

(11) **EP 3 062 018 B1**
(45) Date of publication and mention of the grant of the patent: **08.07.2020**
(21) Application number: 16153665.1
(22) Date of filing: 01.02.2016
(51) Int. Cl.: F23Q 7/00, G01M 15/08, F02P 19/02, G01L 23/22, G01L 23/10, F02P 13/00

(54) **COMBUSTION PRESSURE SENSOR AND GLOW PLUG**
VERBRENNUNGSDRUCKSENSOR UND GLÜHKERZE
CAPTEUR DE PRESSION DE COMBUSTION ET BOUGIE DE PRÉCHAUFFAGE

(30) Priority: 02.02.2015 JP 2015018512; 25.12.2015 JP 2015253190
(43) Date of publication of application: 31.08.2016
(73) Proprietor: NGK SPARK PLUG CO., LTD., Nagoya-shi, Aichi 467-8525 (JP)
(72) Inventor: NISHIYUKI, Kenjiro, Nagoya-shi, Aichi 467-8525 (JP); KAWAKATSU, Masahiro, Nagoya-shi, Aichi 467-8525 (JP); HIROKAWA, Toshiki, Nagoya-shi, Aichi 467-8525 (JP); HARADA, Hiroshi, Nagoya-shi, Aichi 467-8525 (JP); SASSA, Akimitsu, Nagoya-shi, Aichi 467-8525 (JP)
(74) Representative: J A Kemp LLP

(56) References cited:
- DE-A1-102010 037 476
- JP-A- 2015 004 462
- JP-A- 2015 004 463
- US-A1- 2013 269 641

## Description

The present invention relates to a combustion pressure sensor and to a glow plug.

One of known glow plugs is a sensor-equipped glow plug which includes, in addition to a bar-shaped heater section which generates heat upon energization, a sensor element for detecting combustion pressure within a combustion chamber to thereby function as a combustion pressure sensor (see JP-B2-5411363 or its US equivalent US-A1-2013/0269641 on which the precharacterizing portion of claim 1 is based). Such a sensor-equipped glow plug includes a tubular housing which has an opening portion on the forward end side thereof in the axial direction, and an elastic member disposed inside the housing and connected to the heater section and the housing. The housing of the sensor-equipped glow plug accommodates at least a portion of the heater section. A gap is formed between the opening portion of such a housing and the heater section. In the sensor-equipped glow plug, the elastic member elastically deforms so as to allow the heater section to move in the axial direction, and the sensor element detects the combustion pressure received by the heater section from displacement of the heater section.

The glow plug of JP-B2-5411363 has a problem in that since the outer surface of the elastic member is in contact with the inner surface of the housing in a region extending in the axial direction, axial compressive stress acting on the housing when the glow plug is attached to an internal combustion engine is transmitted to the elastic member, whereby the displacement characteristic of the elastic member may change. The change in the displacement characteristic of the elastic member causes an error of the value of the combustion pressure detected by the sensor element. Also, in the case where a gap is formed between the outer surface of the elastic member and the inner surface of the housing, the influence of the compressive stress of the housing on the elastic member is mitigated. However, in this case, there arises another problem in that since the dissipation of heat from the elastic member through the housing decreases, the elastic member is heated within a very short period of time (hereinafter also referred to as "thermal shock") by combustion gas entering the interior of the housing through the opening portion, whereby the displacement characteristic of the elastic member may become more likely to change.

DE-A1-10 2010 037 476 discloses a combustion pressure sensor with first and second membrane springs connecting the heater rod to the housing. Combustion pressure sensors with similar elastic members are also disclosed in JP-A-2015 004463 and JP-A-2015 004462.

The present invention has been accomplished so as to solve the above-described problems, and the present invention can be realized as the following modes.

The present invention provides a combustion pressure sensor as defined by claim 1. By virtue of the gap formed between the forward end portion of the housing and the outer surface of the second tubular portion, the compressive stress in the axial direction applied to the housing can be restrained from affecting the elastic member, and exposure of the second curved portion directly to combustion gas entering the interior of the housing from the opening portion can be prevented by the wall portion. Thus, a change in the displacement characteristic of the elastic member due to thermal shock caused by combustion gas can be suppressed. As a result, the accuracy in detecting the combustion pressure by the sensor element can be improved. A shortest distance between the wall portion and the second curved portion may be greater than 0.0 mm but not greater than 0.5 mm so that exposure of the second curved portion directly to combustion gas entering the interior of the housing from the opening portion can be prevented further by the wall portion.

In the combustion pressure sensor the wall portion may project outward in a radial direction of the rod-like member from a portion of the side surface of the rod-like member, the portion being located on the forward end side of the elastic member, such that the wall portion overlaps with the first tubular portion of the elastic member, the first curved portion thereof, and at least a portion of the second curved portion thereof as viewed in the axial direction. Accordingly, the wall portion can prevent not only the second curved portion but also the first tubular portion and the first curved portion from being exposed directly to combustion gas entering the interior of the housing from the opening portion. Thus, a change in the displacement characteristic of the elastic member due to thermal shock caused by combustion gas can be suppressed further. As a result, the accuracy in detecting the combustion pressure by the sensor element can be improved further.

In the combustion pressure sensor the wall portion may project outward in a radial direction of the rod-like member from the first tubular portion and overlap with the first curved portion of the elastic member and at least a portion of the second curved portion thereof as viewed in the axial direction. Accordingly, the wall portion can prevent not only the second curved portion but also the first curved portion and a portion of the first tubular portion located rearward of the wall portion from being exposed directly to combustion gas entering the interior of the housing from the opening portion. Thus, a change in the displacement characteristic of the elastic member due to thermal shock caused by combustion gas can be suppressed further. As a result, the accuracy in detecting the combustion pressure by the sensor element can be improved further.

In the combustion pressure sensor, the forward end portion may have a first portion including the opening portion and a second portion which is formed on the rear end side of the first portion in the axial direction and is greater in inner diameter than the opening portion, wherein at least the second curved portion and the second tubular portion of the elastic member and a radially outermost portion of the wall portion which overlaps with at least a portion of the second curved portion as viewed in the axial direction are disposed in the second portion, and the radially outermost portion has an outermost diameter greater than the inner diameter of the opening portion. Accordingly, the route along which combustion gas entering the interior of the housing from the opening portion flows to reach the second curved portion can be extended. As a result, a change in the displacement characteristic of the elastic member due to thermal shock caused by combustion gas can be suppressed further.

In the combustion pressure sensor, the forward end portion may have a forward end surface which is located around the opening portion as viewed in the axial direction, wherein the forward end surface overlaps with at least a portion of the second curved portion as viewed in the axial direction. Accordingly, exposure of the second curved portion directly to combustion gas entering the interior of the housing from the opening portion can be prevented further by the forward end surface.

In the combustion pressure sensor, the wall portion may overlap with the entirety of the second curved portion as viewed in the axial direction. Accordingly, exposure of the second curved portion directly to the combustion gas entering the interior of the housing from the opening portion can be prevented further by the wall portion.

In the combustion pressure sensor, the wall portion may be a member different from the elastic member. Accordingly, materials suitable for the wall portion and the elastic member can be employed.

The present invention can be realized in various forms different from the combustion pressure sensor. For example, the present invention can be realized, for example, as a sensor-equipped glow plug, a component of a glow plug, or a manufacturing method for manufacturing a glow plug.

The invention will be further described by way of examples with reference to the accompanying drawings, in which:
FIG. 1 is an external view showing a glow plug.
FIG. 2 is a sectional view showing the glow plug.
FIG. 3 is an enlarged sectional view showing a forward end portion of the glow plug.
FIG. 4 is an enlarged sectional view showing, on a further enlarged scale, a portion of the glow plug with a forward end portion of a housing being depicted centrally.
FIG. 5 is an enlarged sectional view showing, on a further enlarged scale, a portion of the glow plug with an elastic member being depicted centrally.
FIG. 6 is a graph showing the results of an evaluation of the influence of thermal shock on the elastic member.
FIG. 7 is a graph showing the results of an evaluation of the relation between distance and thermal shock.
FIG. 8 is an enlarged sectional view showing a portion of a glow plug according to a second embodiment.
FIG. 9 is an enlarged sectional view showing a portion of a glow plug according to a third embodiment.
FIG. 10 is an enlarged sectional view showing a portion of a glow plug according to a fourth embodiment.
FIG. 11 is an enlarged sectional view showing a portion of a glow plug according to a fifth embodiment.
FIG. 12 is an enlarged sectional view showing a portion of a glow plug according to a sixth embodiment.
FIG. 13 is an enlarged sectional view showing a portion of a glow plug according to a seventh embodiment.
FIG. 14 is an enlarged sectional view showing a portion of a glow plug according to an eighth embodiment.
FIG. 15 is an enlarged sectional view showing a portion of a glow plug according to a ninth embodiment. [FIG.
16] FIG. 16 is an enlarged sectional view showing a portion of a glow plug according to a tenth embodiment.
FIG. 17 is an enlarged sectional view showing a portion of a glow plug according to an eleventh embodiment.

### A. First embodiment

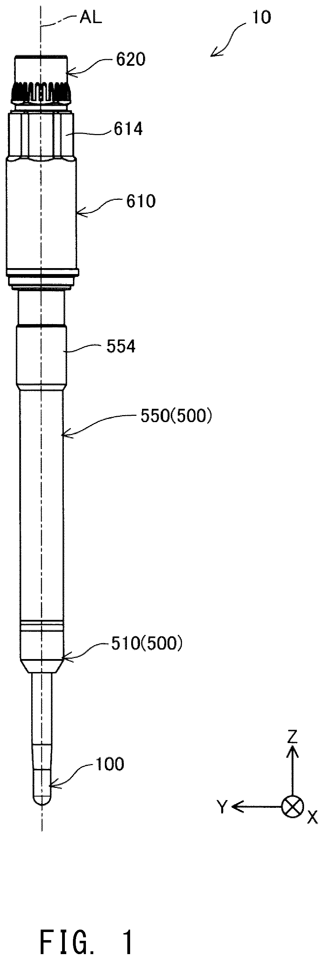

FIG. 1 is an external view showing a glow plug 10. The glow plug 10 is configured as a heat source for assisting ignition at the time of start of an internal combustion engine (not shown) such as a diesel engine, and is configured to detect pressure within a combustion chamber.

In the description of the present embodiment, the lower side (on the drawing sheet) of the glow plug 10 of FIG. 1 will be referred to as the "forward end side," and the upper side (on the drawing sheet) of the glow plug 10 of FIG. 1 will be referred to as the "rear end side." The XYZ coordinate system of FIG. 1 has an X axis, a Y axis, and a Z axis as three spatial axes orthogonal to one another. In the present embodiment, the Z axis is an axis along an axial line AL of the glow plug 10. Of X-axis directions along the X axis, a +X-axis direction is a direction from the near side toward the far side of the sheet, and a -X-axis direction is a direction opposite the +X-axis direction. Of Y-axis directions along the Y axis, a +Y-axis direction is a direction from the right side toward the left side of the sheet, and a -Y-axis direction is a direction opposite the +Y-axis direction. Of Z-axis directions (axial directions) along the Z axis, a +Z-axis direction is a direction from the forward end side toward the rear end side, and a -Z-axis direction is a direction opposite the +Z-axis direction. The X, Y, and Z axes of FIG. 1 correspond to the X, Y, and Z axes in other drawings.

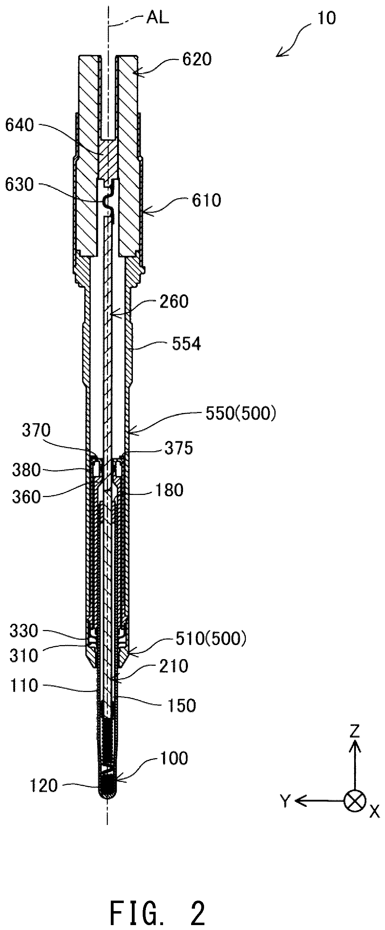

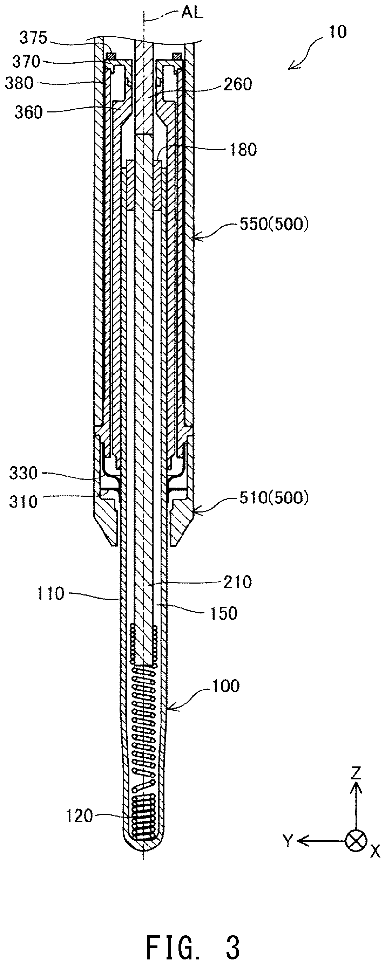

FIG. 2 is a sectional view showing the glow plug 10. FIG. 2 shows a cross sectional shape of the glow plug 10 cut along a plane passing through the axial line AL. FIG. 3 is an enlarged sectional view showing a forward end portion of the glow plug 10. The glow plug 10 includes a heater section 100, axial rods 210, 260, a wall member 310, an elastic member 330, a sleeve 360, a diaphragm 370, a sensor element 375, a support member 380, a housing 500, a protection sleeve 610, a polygonal portion 614 for screwing, a connector member 620, a terminal spring 630, and a terminal member 640.

The heater section 100 of the glow plug 10 is a heat generation device which generates heat through conversion of electrical energy to thermal energy. In the present embodiment, the heater section 100 is a sheathed heater. The heater section 100 is a rod-like member which extends in the axial direction from the rear end side toward the forward end side. The heater section 100 includes a sheath tube 110 and a coil 120.

The sheath tube 110 of the heater section 100 is a conductor formed of metal, and has the shape of a cylindrical tube whose center coincides with the axial line AL and extends from the rear end side toward the forward end side. The forward end of the sheath tube 110 is closed and projects from the forward end of the housing 500. The rear end of the sheath tube 110 is opened and is located inside the housing 500. The axial rod 210 is fitted, together with a seal 180, into the rear end of the sheath tube 110. The seal 180 is a tubular member formed of insulating rubber and establishes an airtight seal between the sheath tube 110 and the axial rod 210.

The coil 120 of the heater section 100 is provided inside the sheath tube 110 and generates heat when energized. The forward end of the coil 120 is joined to the inner side of the sheath tube 110 by means of welding. The rear end of the coil 120 is connected to the axial rod 210.

An insulating powder 150 is charged into the sheath tube 110. The insulating powder 150 is a powder having electrically insulating properties and is mainly formed of magnesium oxide (MgO) in the present embodiment. The insulating powder 150 charged into the sheath tube 110 provides electrical insulation at the gap between the sheath tube 110 and the coil 120 and at the gap between the sheath tube 110 and the axial rod 210.

Each of the axial rods 210 and 260 of the glow plug 10 is a conductor formed of metal. The axial rods 210 and 260 relay the electric power supplied to the coil 120 from the outside of the glow plug 10. In the present embodiment, the material of the axial rods 210 and 260 is stainless steel (for example, SUS430 or the like). Each of the axial rods 210 and 260 has the shape of a bar whose center coincides with the axial line AL and which extends from the rear end side toward the forward end side. The forward end of the axial rod 210 is connected to the coil 120 inside the sheath tube 110. The rear end of the axial rod 210 projects from the sheath tube 110 and is connected to the forward end of the axial rod 260. The rear end of the axial rod 260 is connected to the terminal spring 630.

The protection sleeve 610 of the glow plug 10 is a conductor formed of metal. In the present embodiment, the material of the protection sleeve 610 is stainless steel (for example, SUS410, SUS630, or the like). The protection sleeve 610 has the shape of a cylindrical tube which extends such that its center coincides with the axial line AL. The protection sleeve 610 is joined to the rear end of the housing 500. The terminal member 640 is held within the protection sleeve 610 through the connector member 620.

The connector member 620 of the glow plug 10 is a member having electrically insulating properties. In the present embodiment, the material of the connector member 620 is insulating resin. The connector member 620 has a cylindrical tubular shape. The terminal member 640 is fixed inside the connector member 620.

The terminal spring 630 of the glow plug 10 is a conductor formed of metal. In the present embodiment, the material of the terminal spring 630 is stainless steel (for example, SUS304, or the like). The terminal spring 630 establishes mechanical and electrical connection between the axial rod 260 and the terminal member 640 and absorbs displacement of the axial rod 260 caused by displacement of the heater section 100. In the present embodiment, the terminal spring 630 is a curved plate spring.

The terminal member 640 of the glow plug 10 is a conductor formed of metal. In the present embodiment, the material of the terminal member 640 is stainless steel (for example, SUS410, SUS630, or the like). The terminal member 640 receives the electric power supplied from the outside of the glow plug 10. The electric power supplied to the terminal member 640 is supplied to the coil 120 through the axial rod 260 and the axial rod 210.

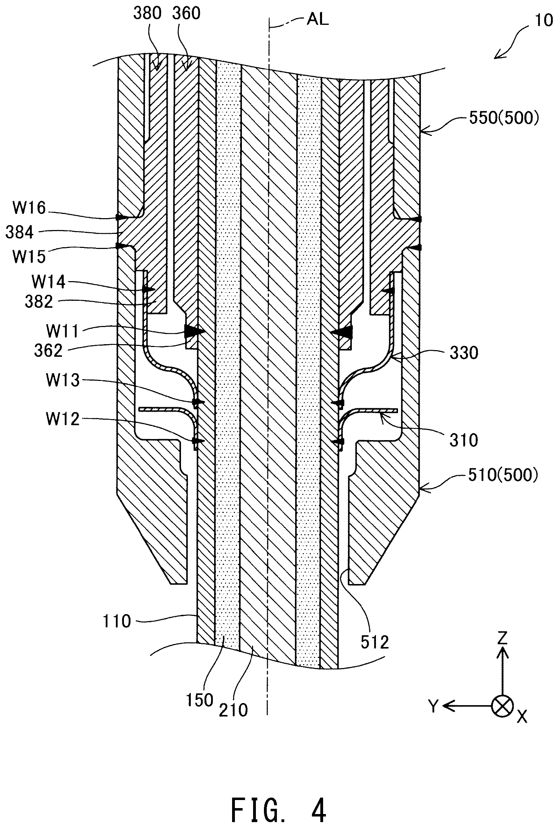

FIG. 4 is an enlarged sectional view showing, on a further enlarged scale, a portion of the glow plug 10 with a forward end portion of the housing 500 being depicted centrally. The sleeve 360 of the glow plug 10 is a conductor formed of metal. In the present embodiment, the material of the sleeve 360 is stainless steel (for example, SUS410, SUS630, or the like). The sleeve 360 has the shape of a cylindrical tube which extends such that its center coincides with the axial line AL. The sleeve 360 has a joint portion 362 joined to a side surface of the sheath tube 110. In the present embodiment, a welded portion W11 is formed at the joint portion 362 as a result of welding between the joint portion 362 and the sheath tube 110. In another embodiment, the joint portion 362 may be joined to the side surface of the sheath tube 110 by means of press fitting. The rear end of the sleeve 360 extends to a point on the rear end side of the sheath tube 110 and is joined to the diaphragm 370. The sleeve 360 transmits displacement of the heater section 100 to the diaphragm 370.

The diaphragm 370 of the glow plug 10 is a conductor formed of metal. In the present embodiment, the material of the diaphragm 370 is stainless steel (for example, SUS410, SUS630, or the like). The diaphragm 370 has the shape of a circular ring whose center coincides with the axial line AL. The sleeve 360 is joined to the inner circumferential side of the diaphragm 370. The support member 380 is joined to the outer circumferential side of the diaphragm 370. The diaphragm 370 deforms in accordance with the displacement of the heater section 100 transmitted thereto through the sleeve 360.

The sensor element 375 of the glow plug 10 detects the combustion pressure acting on the heater section 100 on the basis of the displacement of the heater section 100. In the present embodiment, since the sensor element 375 is joined to the diaphragm 370, the sensor element 375 converts to an electrical signal the displacement of the heater section 100 transmitted to the diaphragm 370 through the sleeve 360. The electrical signal output from the sensor element 375 represents the combustion pressure received by the heater section 100. In the present embodiment, the sensor element 375 is a piezoresistor.

The support member 380 of the glow plug 10 is a conductor formed of metal. In the present embodiment, the material of the support member 380 is stainless steel (for example, SUS410, SUS630, or the like). The support member 380 has the shape of a cylindrical tube which extends such that its center coincides with the axial line AL. The rear end of the support member 380 is joined to the diaphragm 370. The support member 380 has a forward end portion 382 and a joint portion 384. The forward end portion 382 of the support member 380 constitutes a portion of the support member 380 on the forward end side thereof and is joined to the elastic member 330. In the present embodiment, a welded portion W14 is formed at the forward end portion 382 as a result of welding between the forward end portion 382 and the elastic member 330. The joint portion 384 of the support member 380 is located rearward of the forward end portion 382 and is joined to the housing 500. In the present embodiment, welded portions W15 and W16 are formed at the joint portion 384 as a result of welding between the joint portion 384 and the housing 500.

The housing 500 of the glow plug 10 is a conductor formed of metal and has the shape of a tube having an opening portion 512 on the forward end side. The housing 500 accommodates a portion of the heater section 100 such that the heater section 100 projects toward the forward end side from the opening portion 512. In the present embodiment, the housing 500 accommodates not only the heater section 100 but also the axial rods 210 and 260, the wall member 310, the elastic member 330, the sleeve 360, the diaphragm 370, the sensor element 375, and the support member 380. In the present embodiment, the housing 500 has a forward end portion 510 and a main body portion 550.

The forward end portion 510 of the housing 500 is a tubular member which is located on the forward end side of the housing 500 and constitutes the opening portion 512. In the present embodiment, the material of the forward end portion 510 is stainless steel (for example, SUS630 or the like). In the present embodiment, the rear end of the forward end portion 510 is joined to the forward end of the main body portion 550 through the joint portion 384 of the support member 380. In the present embodiment, the forward end portion 510 accommodates the wall member 310 and the elastic member 330.

The main body portion 550 of the housing 500 is a tubular member located rearward of the forward end portion 510. In the present embodiment, the material of the main body portion 550 is carbon steel. In another embodiment, the material of the main body portion 550 may be stainless steel (for example, SUS630 or the like). In the present embodiment, the main body portion 550 has a screw portion 554 configured such that it can be mated with an internal screw thread formed in an internal combustion engine (not shown).

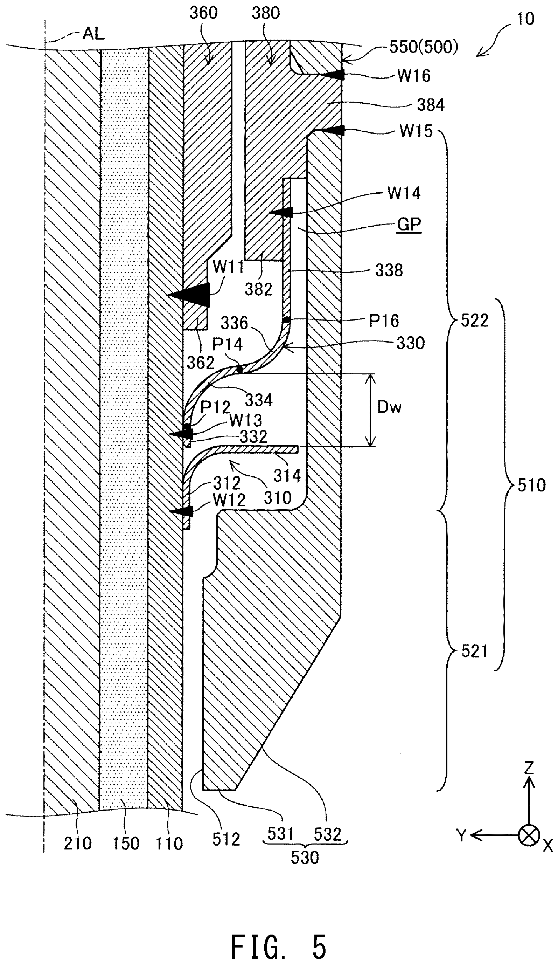

FIG. 5 is an enlarged sectional view showing, on a further enlarged scale, a portion of the glow plug 10 with the elastic member 330 being depicted centrally. The elastic member 330 of the glow plug 10 is a tubular member obtained by forming a thin plate of metal. In the present embodiment, the material of the elastic member 330 is stainless steel (for example, SUS316 or the like). In another embodiment, the material of the elastic member 330 may be a nickel alloy (for example, INCONEL 718 ("INCONEL" is a registered trademark)).

The elastic member 330 is disposed in the housing 500 so as to connect the heater section 100 and the housing 500 and elastically deforms so as to allow the heater section 100 to move in the direction along the axial line AL. In the present embodiment, the elastic member 330 is disposed in the forward end portion 510 of the housing 500 so as to connect the heater section 100 and the housing 500 through the support member 380. The elastic member 330 has a first tubular portion 332, a first curved portion 334, a second curved portion 336, and a second tubular portion 338.

The first tubular portion 332 of the elastic member 330 has the shape of a tube which surrounds the side surface of the heater section 100 and is joined to the heater section 100. In the present embodiment, the first tubular portion 332 is joined to the side surface of the sheath tube 110 at a position on the forward end side of the sleeve 360. In the present embodiment, a welded portion W13 is formed at the first tubular portion 332 as a result of welding between the first tubular portion 332 and the sheath tube 110. In the present embodiment, the welded portion W13 is formed over the entire circumference of the first tubular portion 332.

The first curved portion 334 of the elastic member 330 is curved to be convex toward the rear end side and extends radially outward from a portion of the first tubular portion 332 on the rear end thereof. A base point P12 shown in FIG. 5 shows the position where the first tubular portion 332 and the first curved portion 334 are connected.

The second curved portion 336 of the elastic member 330 is curved to be convex toward the forward end side and extends radially outward from a portion of the first curved portion 334 on the outer circumferential side thereof. A base point P14 shown in FIG. 5 shows the position where the first curved portion 334 and the second curved portion 336 are connected.

The second tubular portion 338 of the elastic member 330 has the shape of a tube connected to a portion of the second curved portion 336 on the outer circumferential side thereof and is connected to the housing 500. A base point P16 shown in FIG. 5 shows the position where the second curved portion 336 and the second tubular portion 338 are connected. In the present embodiment, the second tubular portion 338 is joined to the forward end portion 382 of the support member 380 and is connected to the housing 500 through the support member 380. In the present embodiment, the second tubular portion 338 is joined to the outer surface of the forward end portion 382 of the support member 380. In the present embodiment, a welded portion W14 is formed at the second tubular portion 338 as a result of welding between the second tubular portion 338 and the support member 380. In the present embodiment, the welded portion W14 is formed over the entire circumference of the second tubular portion 338. The forward end portion 510 of the housing 500 forms a gap GP between the forward end portion 510 and at least a portion of the outer surface of the second tubular portion 338. In the present embodiment, the forward end portion 510 forms the gap GP over the entirety of the outer surface of the second tubular portion 338.

The wall member 310 of the glow plug 10 is a tubular member obtained by forming a thin plate of metal. In the present embodiment, the material of the wall member 310 is stainless steel (for example, SUS316 or the like). In another embodiment, the material of the wall member 310 may be a nickel alloy (for example, INCONEL 718 ("INCONEL" is a registered trademark)). The wall member 310 is a member different from the elastic member 330. In the present embodiment, the wall member 310 has a tubular portion 312 and a wall portion 314.

The tubular portion 312 of the wall member 310 has the shape of a tube which surrounds the side surface of the heater section 100 and is joined to the heater section 100. In the present embodiment, the tubular portion 312 is joined to the side surface of the sheath tube 110 at a position located forward of the elastic member 330. In the present embodiment, a welded portion W12 is formed at the tubular portion 312 as a result of welding between the tubular portion 312 and the sheath tube 110. In the present embodiment, the welded portion W12 is formed over the entire circumference of the tubular portion 312.

The wall portion 314 of the wall member 310 is disposed forward of the second curved portion 336 inside the forward end portion 510 and overlaps with at least a portion of the second curved portion 336 as viewed in the axial direction (the Z-axis direction). In the present embodiment, within the forward end portion 510, the wall portion 314 projects outward in the radial direction of the sheath tube 110 from a portion of the side surface of the sheath tube 110, which portion is located forward of the elastic member 330, and overlaps with a portion of the elastic member 330, including the first tubular portion 332, the first curved portion 334, and at least a portion of the second curved portion 336, as viewed in the axial direction (the Z-axis direction). In the present embodiment, the wall portion 314 extends radially outward from a portion of the tubular portion 312 on the rear end side thereof and overlaps with the entirety of the elastic member 330 as viewed in the axial direction (the Z-axis direction). In the present embodiment, the wall portion 314 constitutes a surface extending along the XY plane. In another embodiment, the wall portion 314 may be a sloping surface inclined toward the forward end side or a sloping surface inclined toward the rear end side.

A distance Dw which is the shortest distance between the wall portion 314 and the second curved portion 336 is greater than 0.0 mm but not greater than 0.5 mm. More preferably, the distance Dw is greater than 0.0 mm but not greater than 0.3 mm.

The forward end portion 510 of the housing 500 has a first portion 521 including the opening portion 512, and a second portion 522 formed on the rear end side of the first portion 521 with respect to the axial direction. The second portion 522 is greater in inner diameter than the opening portion 512, and at least the second curved portion 336 and the second tubular portion 338 of the elastic member 330 and a radially outermost portion of the wall portion 314 which overlaps with at least a portion of the second curved portion 336 as viewed in the axial direction (the Z-axis direction) are disposed in the second portion 522. Notably, although the entirety of the wall portion 314 is disposed in the second portion 522 in the example of FIG. 5, in the case where the position of the tubular portion 312 is changed to a position lower than the position shown in FIG. 5, only a portion of the wall portion 314 is disposed in the second portion 522 and the remaining portion is disposed in the first portion 521. In this case, of the wall portion 314, a portion disposed in the second portion 522 corresponds to the "radially outermost portion." Preferably, the outermost diameter of the wall portion 314 (the radially outermost portion) is greater than the inner diameter of the opening portion 512. The "outermost diameter of the wall portion 314 (the radially outermost portion)" means the outer diameter of the wall portion 314 (the radially outermost portion) measured in a state in which the wall portion 314 (the radially outermost portion) is projected in the direction of the axial line AL. These configurations are the same in the second through eighth embodiments which will be described later. Through employment of such a shape, a route along which combustion gas entering the interior of the housing 500 from the opening portion 512 flows to reach the second curved portion 336 can be extended. Also, a change in the displacement characteristic of the elastic member 330 due to thermal shock caused by combustion gas can be suppressed further.

The forward end portion 510 of the housing 500 is divided into the opening portion 512 and an approximately conical forward end surface 530 around the opening portion 512 when the forward end portion 510 is viewed in the axial direction (the Z-axis direction) (when it is viewed upward from the lower side in FIG. 5). In the example of FIG. 5, the forward end surface 530 is divided into a flat surface 531 surrounding the opening portion 512 and a taper surface 532 continuously extending rearward from the flat surface 531. However, the forward end surface 530 may be a continuous curved surface having no such a division. Preferably, the forward end surface 530 overlaps with at least a portion of the second curved portion 336 as viewed in the axial direction. Through employment of such a shape, exposure of the second curved portion 336 directly to combustion gas entering the interior of the housing 500 from the opening portion 512 can be prevented further by the forward end surface 530.

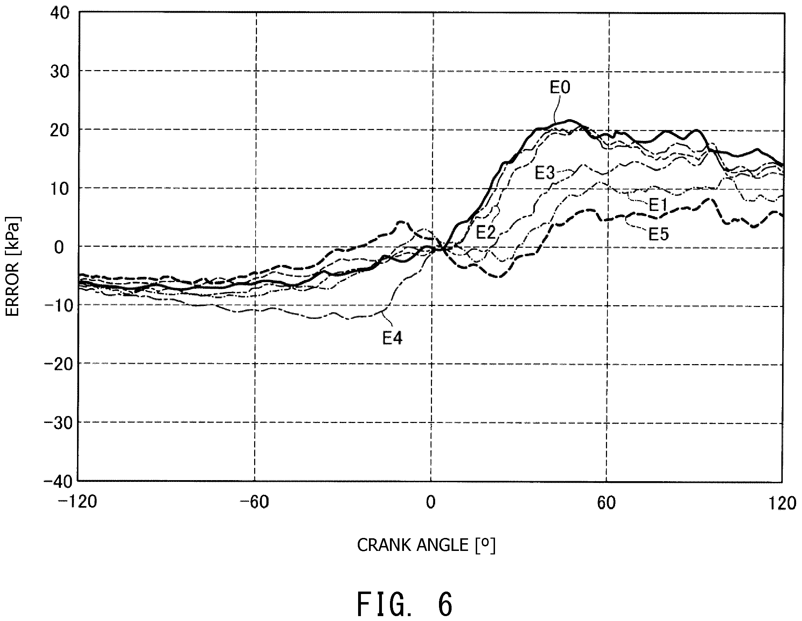

FIG. 6 is a graph showing the results of an evaluation of the influence of thermal shock on the elastic member 330. In the evaluation test of FIG. 6, a tester prepared, as samples E0, E1, E2, E3, E4, and E5, a plurality of glow plugs differing from one another in terms of the manner of protecting the elastic member 330.

The sample E0 is the same as the above-described glow plug 10 except that the wall member 310 is not provided.

The sample E1 is the same as the sample E0 except that resin is applied only to the outer surface of the first tubular portion 332, which is a portion of the surface of the elastic member 330.

The sample E2 is the same as the sample E0 except that resin is applied only to the outer surface of the first curved portion 334, which is a portion of the surface of the elastic member 330.

The sample E3 is the same as the sample E0 except that resin is applied only to the outer surface of the second curved portion 336, which is a portion of the surface of the elastic member 330.

The sample E4 is the same as the sample E0 except that resin is applied only to the outer surface of the second tubular portion 338, which is a portion of the surface of the elastic member 330.

The sample E5 is the same as the sample E0 except that resin is applied to the entirety of the outer surface of the elastic member 330.

The tester attached each sample to an internal combustion engine for testing equipped with a reference sensor and measured the combustion pressure detected by the reference sensor and the combustion pressure detected by each sample while operating the internal combustion engine at 1000 rpm with no load applied to the engine. Subsequently, the tester calculated an error of each sample with respect to the reference sensor for each crank angle to thereby obtain the results of FIG. 6. The horizontal axis of FIG. 6 shows the crank angle of the internal combustion engine, and the vertical axis of FIG. 6 shows the error of each sample.

The evaluation test of FIG. 6; specifically, comparison between the sample E0 and the sample E5, reveals that the error with respect to the reference sensor can be suppressed by protecting the elastic member 330 from thermal shock. Also, from the viewpoint of suppressing the error with respect to the reference sensor, it is preferred that, rather than the first curved portion 334 (sample E2) and the second tubular portion 338 (sample E4), the first tubular portion 332 (sample E1) and secondly the second curved portion 336 (sample E3) be chosen as a portion of the elastic member 330 to be protected.

Conceivably, the results of the evaluation test of FIG. 6 are obtained for the following reasons. Since thermal shock is generated as a result of addition of axial thermal expansions of the various portions of the elastic member 330, the influence of thermal shock tends to appear greatly at portions extending along the axial direction such as the first tubular portion 332 and the second tubular portion 338. Since the second tubular portion 338 is joined to the housing 500 through the forward end portion 382 of the support member 380, when the second tubular portion 338 is heated, the heat of the second tubular portion 338 is easily transferred to the housing 500 side. Therefore, even when the second tubular portion 338 is heated, an increase in the temperature of the second tubular portion 338 is small, and the influence of the thermal shock on the second tubular portion 338 is small. Conceivably, this is the reason why the error suppression effect of the sample E1 was higher than that of the sample E4 in the evaluation test of FIG. 6. Meanwhile, as to the first curved portion 334 and the second curved portion 336 of the elastic member 330, which portions extend in directions intersecting with the axial direction, their areas as viewed in the axial direction affect the magnitude of thermal shock. In the present embodiment, since the area of the second curved portion 336 as viewed in the axial direction is greater than the area of the first curved portion 334 as viewed in the axial direction, the influence of thermal shock on the second curved portion 336 is greater than the influence of thermal shock on the first curved portion 334. Conceivably, this is the reason why the error suppression effect of the sample E3 was higher than that of the sample E2 in the evaluation test of FIG. 6.

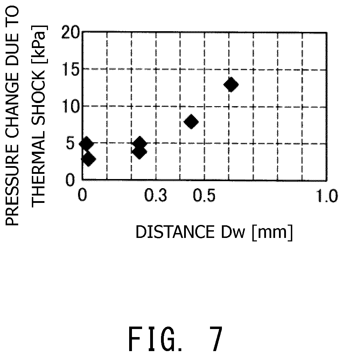

FIG. 7 is a graph showing the results of an evaluation of the relation between the distance Dw and thermal shock. The tester prepared, as samples, a plurality of glow plugs having different distances Dw, and measured a change in the pressure due to thermal shock on the second curved portion 336, to thereby obtain the results of FIG. 7. The horizontal axis of FIG. 7 shows the distance Dw, and the vertical axis of FIG. 7 shows the change in the pressure due to thermal shock on the second curved portion 336. The evaluation test of FIG. 7 reveals that the distance Dw is preferably equal to or less than 0.5 mm and is more preferably equal to or less than 0.3 mm from the viewpoint of suppressing the change in the pressure due to thermal shock on the second curved portion 336.

According to the above-described first embodiment, by virtue of the gap GP formed between the forward end portion 510 of the housing 500 and the outer surface of the second tubular portion 338, the compressive stress in the axial direction (the Z-axis direction ) applied to the housing 500 is restrained from affecting the elastic member 330, and exposure of the second curved portion 336 directly to combustion gas entering the interior of the housing 500 from the opening portion 512 can be prevented by the wall portion 314. Thus, a change in the displacement characteristic of the elastic member 330 due to thermal shock caused by combustion gas can be suppressed. As a result, the accuracy in detecting the combustion pressure by the sensor element 375 can be improved.

Also, the wall portion 314 has a shape determined such that inside the forward end portion 510, the wall portion 314 projects outward in the radial direction of the sheath tube 110 from a portion of the side surface of the sheath tube 110, which portion is located forward of the elastic member 330, and the wall portion 314 overlaps with the first tubular portion 332, the first curved portion 334, and the second curved portion 336 of the elastic member 330 as viewed in the axial direction (the Z-axis direction). Therefore, the wall portion 314 can prevent not only the second curved portion 336 but also the first tubular portion 332 and the first curved portion 334 from being exposed directly to combustion gas entering the interior of the housing 500 from the opening portion 512. Thus, a change in the displacement characteristic of the elastic member 330 due to thermal shock caused by combustion gas can be suppressed further. As a result, the accuracy in detecting the combustion pressure by the sensor element 375 can be improved further.

Also, since the distance Dw between the wall portion 314 and the second curved portion 336 is greater than 0.0 mm but not greater than 0.5 mm, exposure of the second curved portion 336 directly to combustion gas entering the interior of the housing 500 from the opening portion 512 can be prevented further by the wall portion 314. Also, since the wall portion 314 is a member different from the elastic member 330, materials suitable for the wall portion 314 and the elastic member 330 can be employed.

### B. Second embodiment

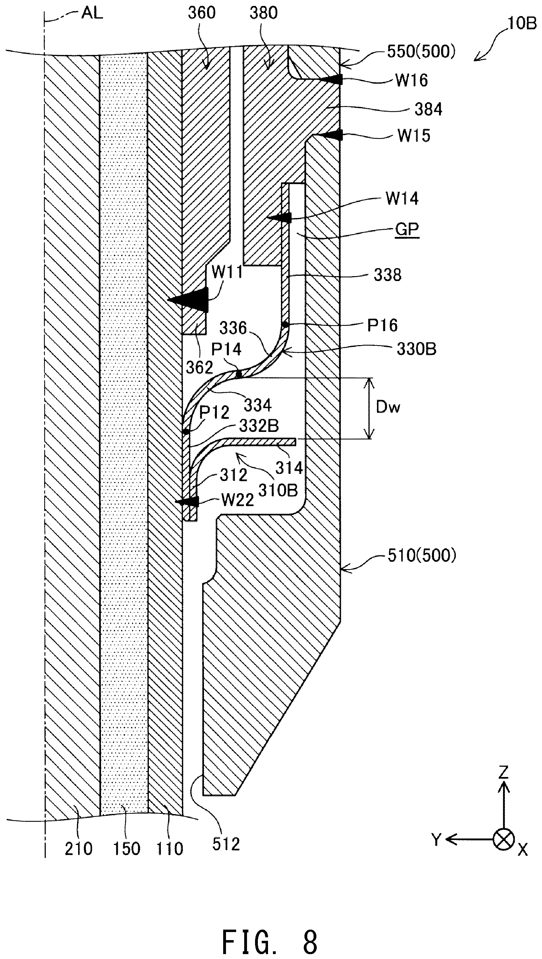

FIG. 8 is an enlarged sectional view showing a portion of a glow plug 10B according to a second embodiment. The glow plug 10B of the second embodiment is identical with the glow plug 10 of the first embodiment except the point that the glow plug 10B has a wall member 310B and an elastic member 330B in place of the wall member 310 and the elastic member 330.

The elastic member 330B of the glow plug 10B is identical with the elastic member 330 of the first embodiment except the point that the elastic member 330B has, in place of the first tubular portion 332, a first tubular portion 332B which can be welded to the sheath tube 110 together with the wall member 310B. In the present embodiment, the first tubular portion 332B of the elastic member 330B is identical with the first tubular portion 332 except the point that the first tubular portion 332B is longer in the axial direction than the first tubular portion 332. In the present embodiment, a welded portion W22 is formed at the first tubular portion 332B as a result of welding to the sheath tube 110. In the present embodiment, the welded portion W22 is formed over the entire circumference of the first tubular portion 332B.

The wall member 310B of the glow plug 10B is identical with the wall member 310 of the first embodiment except the point that the wall member 310B is welded to the sheath tube 110 through the elastic member 330B. In the present embodiment, the welded portion W22 is formed at the tubular portion 312 of the wall member 310B as a result of welding to the sheath tube 110 through the elastic member 330B. In the present embodiment, the welded portion W22 is formed over the entire circumference of the tubular portion 312.

According to the above-described second embodiment, as in the first embodiment, the accuracy in detecting the combustion pressure by the sensor element 375 can be improved. Also, the wall portion 314 has a shape determined such that the wall portion 314 projects outward in the radial direction of the sheath tube 110 from the first tubular portion 332B, and the wall portion 314 overlaps with the entirety of the the second curved portion 336 as viewed in the axial direction (the Z-axis direction). Therefore, the wall portion 314 can prevent not only the second curved portion 336 but also a portion of the first tubular portion 332B and the first curved portion 334 from being exposed directly to combustion gas entering the interior of the housing 500 from the opening portion 512. Thus, a change in the displacement characteristic of the elastic member 330B due to thermal shock caused by combustion gas can be suppressed further. As a result, the accuracy in detecting the combustion pressure by the sensor element 375 can be improved further.

### C. Third embodiment

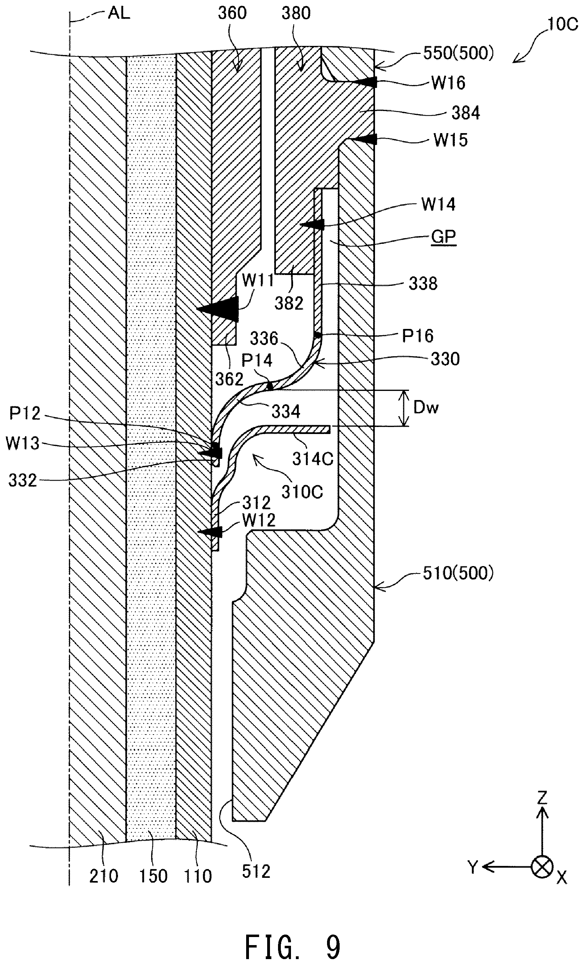

FIG. 9 is an enlarged sectional view showing a portion of a glow plug 10C according to a third embodiment. The glow plug 10C of the third embodiment is identical with the glow plug 10 of the first embodiment except the point that the glow plug 10C has a wall member 310C in place of the wall member 310.

The wall member 310C of the glow plug 10C is identical with the wall member 310 of the first embodiment except the point that the wall member 310C has a wall portion 314C in place of the wall portion 314. The wall portion 314C of the wall member 310C is identical with the wall portion 314 of the first embodiment except the point that the wall portion 314C extends in the +Z-axis direction from the tubular portion 312 to a positon corresponding to the first tubular portion 332 of the elastic member 330 and projects outward in the radial direction of the sheath tube 110.

According to the above-described third embodiment, exposure of the second curved portion 336 directly to combustion gas entering the interior of the housing 500 from the opening portion 512 can be prevented by the wall portion 314C. As a result, as in the case of the first embodiment, the accuracy in detecting the combustion pressure by the sensor element 375 can be improved.

### D. Fourth embodiment

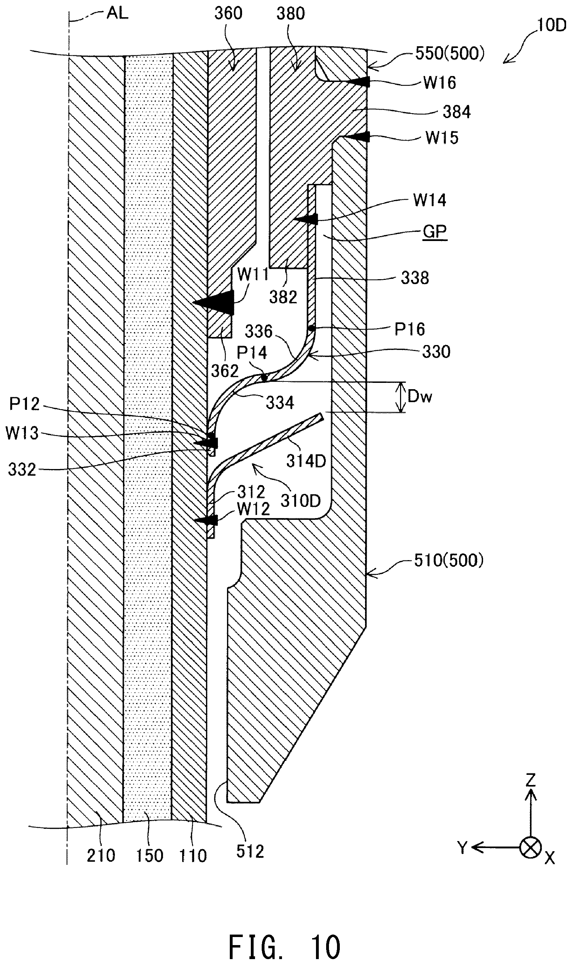

FIG. 10 is an enlarged sectional view showing a portion of a glow plug 10D according to a fourth embodiment. The glow plug 10D of the fourth embodiment is identical with the glow plug 10 of the first embodiment except the point that the glow plug 10D has a wall member 310D in place of the wall member 310.

The wall member 310D of the glow plug 10D is identical with the wall member 310 of the first embodiment except the point that the wall member 310D has a wall portion 314D in place of the wall portion 314. The wall portion 314D of the wall member 310D is identical with the wall portion 314 of the first embodiment except the point that the wall portion 314D has a sloping surface facing toward the side surface of the sheath tube 110 and the rear end side. In the present embodiment, the wall portion 314D overlaps with the entirety of the elastic member 330 as viewed in the axial direction (the Z-axis direction).

According to the above-described fourth embodiment, exposure of the second curved portion 336 directly to combustion gas entering the interior of the housing 500 from the opening portion 512 can be prevented by the wall portion 314D. As a result, as in the case of the first embodiment, the accuracy in detecting the combustion pressure by the sensor element 375 can be improved.

Also, since the surface area of the wall portion 314D having a sloping surface increases as compared with the case where the wall portion is perpendicular to the side surface of the sheath tube 110, the amount of heat which is taken by the wall portion 314D from the combustion gas entering the interior of the housing 500 from the opening portion 512 can be increased. As a result, the thermal shock which the elastic member 330 receives can be suppressed.

### E. Fifth embodiment

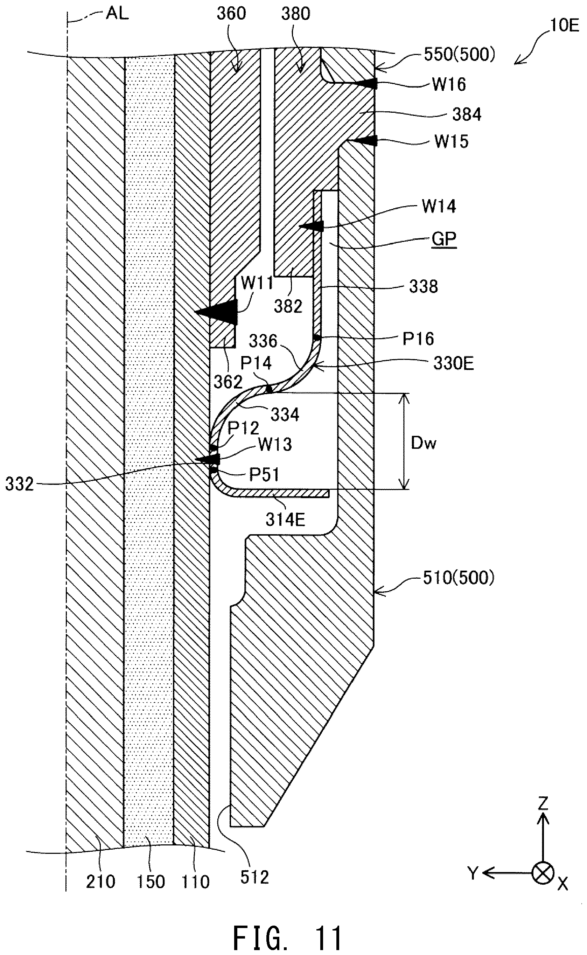

FIG. 11 is an enlarged sectional view showing a portion of a glow plug 10E according to a fifth embodiment. The glow plug 10E of the fifth embodiment is identical with the glow plug 10 of the first embodiment except the point that the glow plug 10E has an elastic member 330E in place of the wall member 310 and the elastic member 330.

The elastic member 330E of the glow plug 10E is identical with the elastic member 330 of the first embodiment except the point that the elastic member 330E has a wall portion 314E. The wall portion 314E of the elastic member 330E has a shape such that it extends radially outward from a portion of the first tubular portion 332 on the forward end side. A base point P51 shown in FIG. 11 shows a position where the first tubular portion 332 and the wall portion 314E are connected. The wall portion 314E overlaps with at least a portion of the second curved portion 336 as viewed in the axial direction (the Z-axis direction). In the present embodiment, the wall portion 314E overlaps with the entirety of the second curved portion 336 as viewed in the axial direction (the Z-axis direction). In the present embodiment, the wall portion 314E constitutes a surface extending along the XY plane. In another embodiment, the wall portion 314E may be a sloping surface inclined toward the forward end side or a sloping surface inclined toward the rear end side.

According to the above-described fifth embodiment, exposure of the second curved portion 336 directly to combustion gas entering the interior of the housing 500 from the opening portion 512 can be prevented by the wall portion 314E. As a result, as in the case of the first embodiment, the accuracy in detecting the combustion pressure by the sensor element 375 can be improved.

### F. Sixth embodiment

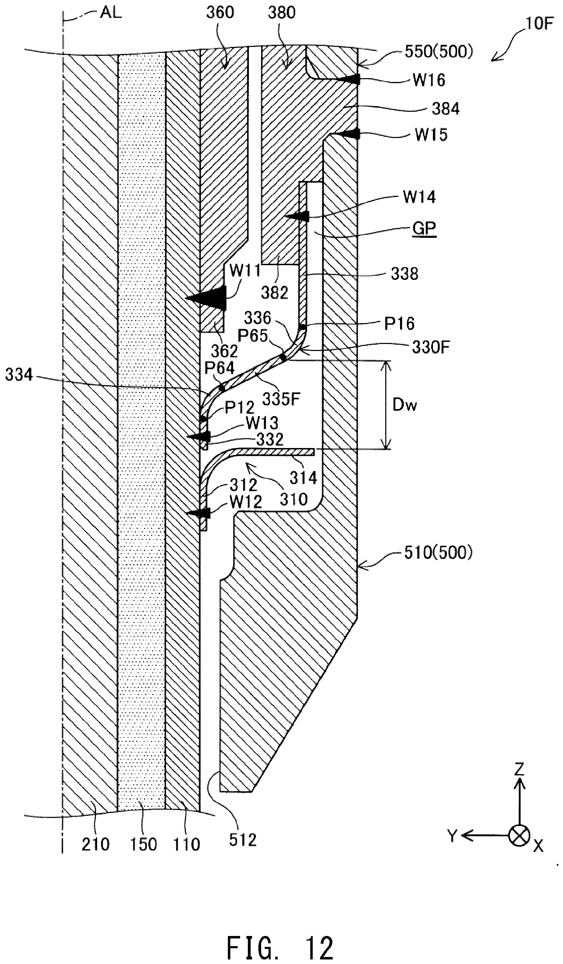

FIG. 12 is an enlarged sectional view showing a portion of a glow plug 10F according to a sixth embodiment. The glow plug 10F of the sixth embodiment is identical with the glow plug 10 of the first embodiment except the point that the glow plug 10F has an elastic member 330F in place of the elastic member 330.

The elastic member 330F of the glow plug 10F is identical with the elastic member 330 of the first embodiment except the point that the elastic member 330F has a straight portion 335F between the first curved portion 334 and the second curved portion 336. The straight portion 335F of the elastic member 330F has the shape of a tube connecting the first curved portion 334 and the second curved portion 336. The cross section of the straight portion 335F taken along the axial direction is straight. A base point P64 shown in FIG. 12 shows a position where the first curved portion 334 and the straight portion 335F are connected. A base point P65 shown in FIG. 12 shows a position where the straight portion 335F and the second curved portion 336 are connected.

According to the above-described sixth embodiment, as in the case of the first embodiment, the accuracy in detecting the combustion pressure by the sensor element 375 can be improved.

### G. Seventh embodiment

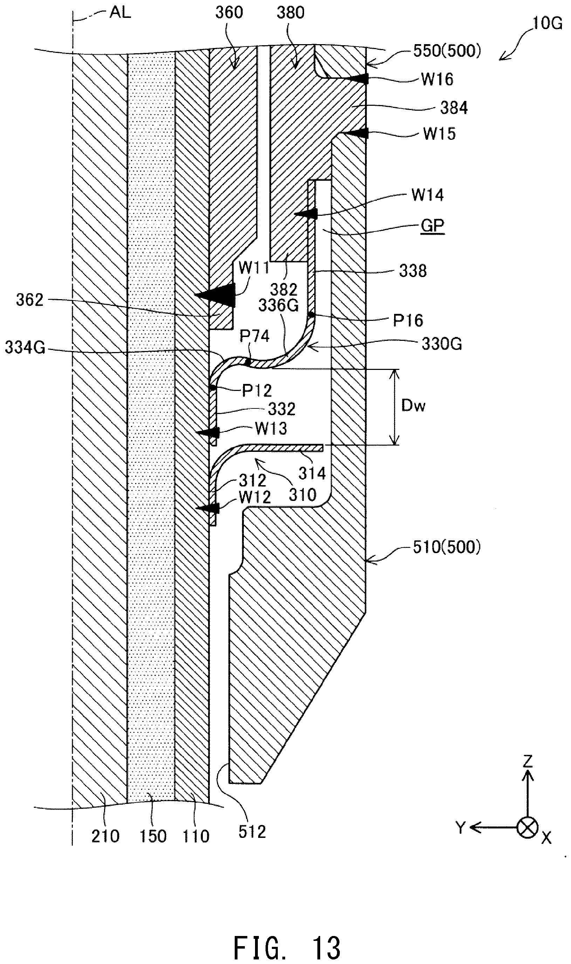

FIG. 13 is an enlarged sectional view showing a portion of a glow plug 10G according to a seventh embodiment. The glow plug 10G of the seventh embodiment is identical with the glow plug 10 of the first embodiment except the point that the glow plug 10G has an elastic member 330G in place of the elastic member 330.

The elastic member 330G of the glow plug 10G is identical with the elastic member 330 of the first embodiment except the point that the elastic member 330G has a first curved portion 334G and a second curved portion 336G in place of the first curved portion 334 and the second curved portion 336. The first curved portion 334G of the elastic member 330G is identical with the first curved portion 334 in the first embodiment except the point that the first curved portion 334G projects toward the rear end side relative to a base point P74 where the first curved portion 334G is connected to the second curved portion 336G. The second curved portion 336G of the elastic member 330G is identical with the second curved portion 336 in the first embodiment except the point that the second curved portion 336G projects toward the forward end side relative to the base point P74 where the second curved portion 336G is connected to the first curved portion 334G.

According to the above-described seventh embodiment, as in the case of the first embodiment, the accuracy in detecting the combustion pressure by the sensor element 375 can be improved.

### H. Eighth embodiment

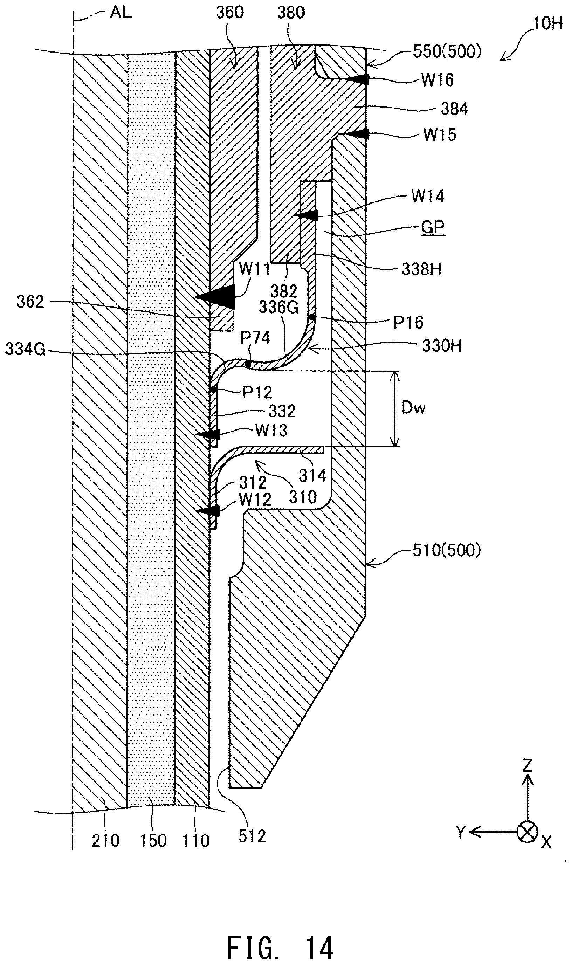

FIG. 14 is an enlarged sectional view showing a portion of a glow plug 10H according to an eighth embodiment. The glow plug 10H of the eighth embodiment is identical with the glow plug 10G of the seventh embodiment except the point that the glow plug 10H has an elastic member 330H in place of the elastic member 330G.

The elastic member 330H of the glow plug 10H is identical with the elastic member 330G of the seventh embodiment except the point that the elastic member 330H has a second tubular portion 338H in place of the second tubular portion 338. The second tubular portion 338H of the elastic member 330H is identical with the second tubular portion 338 of the seventh embodiment except the point that a portion of the second tubular portion 338H which is joined to the forward end portion 382 of the support member 380 is thicker than the remaining portion.

According to the above-described eighth embodiment, as in the case of the seventh embodiment, the accuracy in detecting the combustion pressure by the sensor element 375 can be improved.

### I. Ninth embodiment

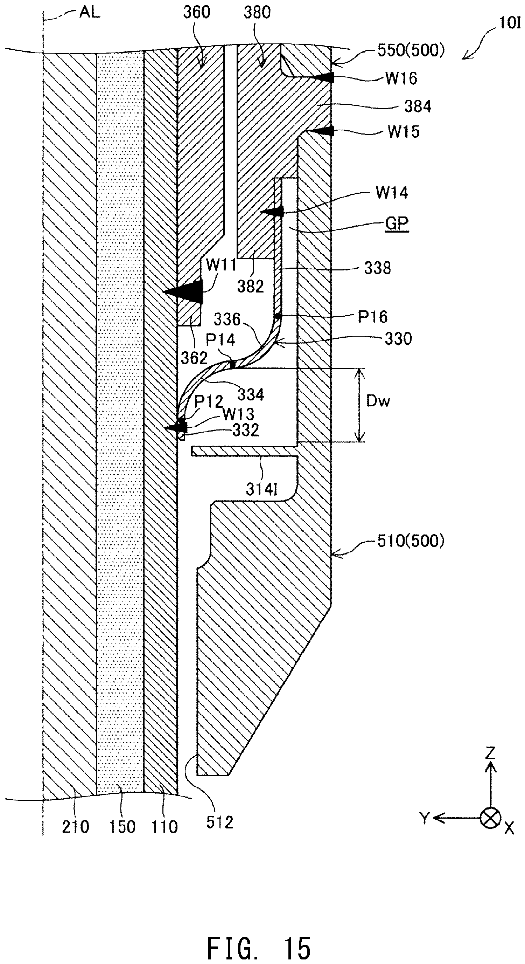

FIG. 15 is an enlarged sectional view showing a portion of a glow plug 10I according to a ninth embodiment. The glow plug 10I of the ninth embodiment is identical with the glow plug 10 of the first embodiment except the point that the glow plug 10I has a wall portion 3141 in place of the wall member 310.

The wall portion 3141 of the glow plug 10I has a shape such that the wall portion 3141 projects toward the sheath tube 110 from the inner surface of the forward end portion 510 at a position located forward of the second curved portion 336, and overlaps with at least a portion of the second curved portion 336 as viewed in the axial direction. In the present embodiment, the wall portion 3141 overlaps with the entirety of the second curved portion 336 as viewed in the axial direction. In the present embodiment, the wall portion 3141 is a portion of the forward end portion 510. In another embodiment, the wall portion 3141 may be configured by joining a member different from the forward end portion 510 to the forward end portion 510. In the present embodiment, the distance Dw between the wall portion 3141 and the second curved portion 336 is greater than 0.0 mm but not greater than 0.5 mm.

According to the above-described ninth embodiment, exposure of the second curved portion 336 directly to combustion gas entering the interior of the housing 500 from the opening portion 512 can be prevented by the wall portion 3141 formed as a portion of the housing 500. As a result, as in the case of the first embodiment, the accuracy in detecting the combustion pressure by the sensor element 375 can be improved.

### J. Tenth embodiment

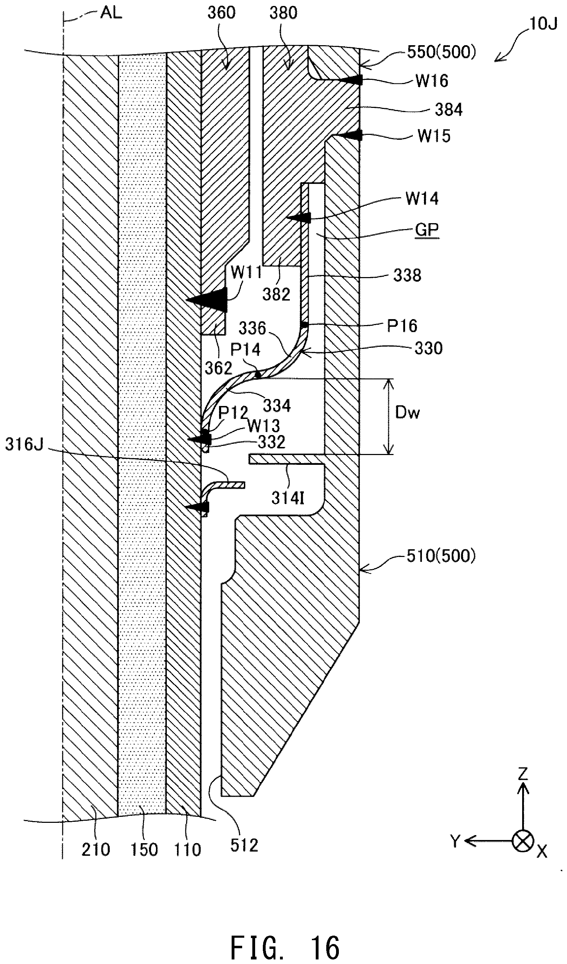

FIG. 16 is an enlarged sectional view showing a portion of a glow plug 10J according to a tenth embodiment. The glow plug 10J of the tenth embodiment is identical with the glow plug 10I of the ninth embodiment except the point that the glow plug 10J has a wall portion 316J.

The wall portion 316J of the glow plug 10J is another wall portion configured such that within the forward end portion 510, the wall portion 316J projects outward in the radial direction of the sheath tube 110 from a portion of the side surface of the sheath tube 110, which portion is located forward of the elastic member 330, and overlaps with at least the first tubular portion 332 as viewed in the axial direction. As in the case of the wall portion 314 of the first embodiment having been described with reference to FIG. 5, the outermost diameter of the wall portion 316J is preferably greater than the inner diameter of the opening portion 512.

In the present embodiment, the wall portion 316J is a tubular member obtained by forming a thin plate of metal as in the case of the wall member 310 of the first embodiment. In the present embodiment, the wall portion 316J is joined to the side surface of the sheath tube 110 by means of welding.

In the present embodiment, the wall portion 316J is disposed forward of the wall portion 3141. In another embodiment, the wall portion 316J may be disposed rearward of the wall portion 3141.

According to the above-described tenth embodiment, as in the case of the ninth embodiment, the accuracy in detecting the combustion pressure by the sensor element 375 can be improved. Also, exposure of the first tubular portion 332 directly to combustion gas entering the interior of the housing 500 from the opening portion 512 can be prevented by the wall portion 316J. Thus, a change in the displacement characteristic of the elastic member 330 due to thermal shock caused by combustion gas can be suppressed further. As a result, the accuracy in detecting the combustion pressure by the sensor element 375 can be improved further.

Also, since the wall portion 316J is disposed forward of the wall portion 3141, a route along which the combustion gas entering the interior of the housing 500 from the opening portion 512 flows to reach the second curved portion 336 can be extended, as compared with the case where the wall portion 316J is disposed rearward of the wall portion 3141. As a result, a change in the displacement characteristic of the elastic member 330 due to thermal shock caused by combustion gas can be suppressed further.

### K. Other embodiments

The present invention is not limited to the above described embodiments, examples, and modifications and may be embodied in various other forms without departing from the scope of the invention. For example, the technical features in the embodiments, examples, and modifications corresponding to the technical features in the modes described in Summary of the Invention can be appropriately replaced or combined to solve some of or all the foregoing problems or to achieve some of or all the foregoing effects. Also, a technical feature which is not described as an essential feature in the present specification may be appropriately deleted.

For example, the heater section 100 is not limited to a sheathed heater and may be a ceramic heater. Also, the present invention can be applied to a combustion pressure sensor in which the heater section 100 is replaced with a rod-like member other than the heat generation device. Also, it is sufficient for the wall portion to overlap with at least a portion of the second curved portion of the elastic member, rather than the entirety of the elastic member, as viewed in the axial direction.

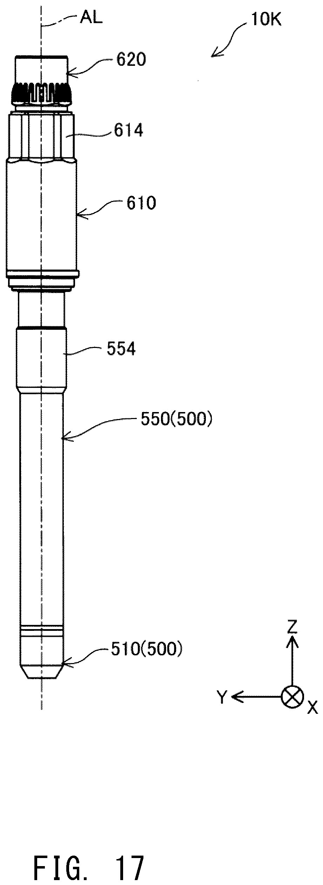

FIG. 17 is an external view showing a combustion pressure sensor 10K according to an eleventh embodiment. The combustion pressure sensor 10K is identical to the first embodiment shown in FIG. 1 except the point that a rod-like member (not shown) which does not have a heat generation function is used in place of the heater section 100 and the rod-like member does not project outward from the forward end portion 510 of the housing 500. Notably, it is preferred that the forward end of the rod-like member extends to a position where the circumference of the forward end is surrounded by the opening portion 512 (FIG. 4) of the housing 500. This combustion pressure sensor 10K also achieves effects approximately the same as those of the first embodiment.

### [Description of Reference Numerals]

- 10, 10B - 10J ···: glow plug
- 10K ···: combustion pressure sensor
- 100 ···: heater section (rod-like member)
- 110 ···: sheath tube
- 120 ···: coil
- 150 ···: insulating powder
- 180 ···: seal
- 210, 260 ···: axial rod
- 310, 310B, 310C, 310D ···: wall member
- 312 ···: tubular portion
- 314, 314C, 314D, 314E, 3141, 316J ···: wall portion
- 330, 330B, 330E, 330F, 330G, 330H ···: elastic member
- 332, 332B ···: first tubular portion
- 334, 334G ···: first curved portion
- 335F ···: straight portion
- 336, 336G ···: second curved portion
- 338, 338H ···: second tubular portion
- 360 ···: sleeve
- 362 ···: joint portion
- 370 ···: diaphragm
- 375 ···: sensor element
- 380 ···: support member
- 382 ···: forward end portion
- 384 ···: joint portion
- 500 ···: housing
- 510 ···: forward end portion
- 512 ···: opening portion
- 521 ···: first portion
- 522 ···: second portion
- 530 ···: forward end surface
- 531 ···: flat surface
- 532 ···: taper surface
- 550 ···: main body portion
- 554 ···: screw portion
- 610 ···: protection sleeve
- 614 ···: polygonal portion
- 620 ···: connector member
- 630 ···: terminal spring
- 640 ···: terminal member

## Claims

1. A combustion pressure sensor comprising:
a rod-like member (100) extending in an axial direction from a rear end side toward a forward end side;
a housing (500) which has the shape of a tube having an opening portion (512) on the forward end side and accommodates at least a portion of the rod-like member (100);
an elastic member (330) which is disposed in the housing (500) so as to connect the rod-like member (100) and the housing (500) and elastically deforms so as to allow the rod-like member (100) to move in the axial direction; and
a sensor element (375) which is accommodated in the housing (500) and detects combustion pressure received by the rod-like member (100) on the basis of displacement of the rod-like member (100),
the elastic member (330) including:
a first tubular portion (332) which has the shape of a tube surrounding a side surface of the rod-like member (100) and is joined to the rod-like member (100),
a first curved portion (334) which is curved to be convex toward the rear end side and extends radially outward from a portion of the first tubular portion (332) on the rear end side,
a second curved portion (336) which is curved to be convex toward the forward end side and extends radially outward from a portion of the first curved portion (334) on an outer circumferential side thereof, and
a second tubular portion (338) which has the shape of a tube connected to a portion of the second curved portion (336) on an outer circumferential side thereof and is connected to the housing (500),
wherein the housing (500) includes a forward end portion (510) which constitutes the opening portion (512), accommodates at least a portion of the first tubular portion (332) of the elastic member (330), the first curved portion (334) thereof, the second curved portion (336) thereof, and at least a portion of the second tubular portion (338) thereof, and forms a gap (GP) between the forward end portion (510) and at least a portion of an outer surface of the second tubular portion (338), and
wherein the combustion pressure sensor further comprises a wall portion (310,3141) which is disposed within the forward end portion (510) to be located on the forward end side of the second curved portion (336) and is connected to only one of the rod-like member (100) or the forward end portion (510) of the housing (500);
**characterized in that**: the wall portion (310,3141) overlaps with at least a portion of the second curved portion (336) as viewed in the axial direction.

2. A combustion pressure sensor according to claim 1, wherein the wall portion (310) projects outward in a radial direction of the rod-like member (100) from a portion of the side surface of the rod-like member (100), the portion being located on the forward end side of the elastic member (330), and the wall portion (310) overlaps with the first tubular portion (332) of the elastic member (330), the first curved portion (334) thereof, and at least a portion of the second curved portion (336) thereof as viewed in the axial direction.

3. A combustion pressure sensor according to claim 1, wherein the wall portion (310) projects outward in a radial direction of the rod-like member (100) from the first tubular portion (332) and overlaps with the first curved portion (334) of the elastic member (330) and at least a portion of the second curved portion (336) thereof as viewed in the axial direction.

4. A combustion pressure sensor according to any one of claims 1 to 3, wherein
the forward end portion (510) has a first portion (521) including the opening portion (512) and a second portion (522) which is formed on the rear end side of the first portion (521) in the axial direction and is greater in inner diameter than the opening portion (512);
at least the second curved portion (336) and the second tubular portion (338) of the elastic member (330) and a radially outermost portion (314) of the wall portion (310) which overlaps with at least a portion of the second curved portion (336) as viewed in the axial direction are disposed in the second portion (522); and
the radially outermost portion (314) has an outermost diameter greater than the inner diameter of the opening portion (512).

5. A combustion pressure sensor according to any one of claims 1 to 4, wherein the forward end portion (510) has a forward end surface which is located around the opening portion (512) as viewed in the axial direction, and the forward end surface overlaps with at least a portion of the second curved portion (336) as viewed in the axial direction.

6. A combustion pressure sensor according to any one of claims 1 to 5, wherein the wall portion (310) overlaps with the entirety of the second curved portion (336) as viewed in the axial direction.

7. A combustion pressure sensor according to any one of claims 1 to 6, wherein a shortest distance between the wall portion (310, 3141) and the second curved portion (336) is greater than 0.0 mm but not greater than 0.5 mm

8. A combustion pressure sensor according to any one of claims 1 to 7, wherein the wall portion (310) is a member different from the elastic member (330).

9. A glow plug including a combustion pressure sensor according to any one of the preceding claims and wherein the rod-like member comprises a heater section (100) which generates heat upon energization.

## Patentansprüche

1. Verbrennungsdrucksensor, umfassend:
ein stabartiges Element (100), das sich in axialer Richtung von einer hinteren Endseite zu einer vorderen Endseite erstreckt;
ein Gehäuse (500), welches die Form eines Rohrs aufweist und einen Öffnungsabschnitt (512) auf der vorderen Endseite hat und zumindest einen Abschnitt des stabartigen Elements (100) beherbergt;
ein elastisches Element (330), welches in dem Gehäuse (500) angeordnet ist, um das stabartige Element (100) und das Gehäuse (500) zu verbinden und sich elastisch verformt, um dem stabartigen Element (100) eine Bewegung in die axiale Richtung zu ermöglichen; und
ein Sensorelement (375), welches in dem Gehäuse (500) beherbergt ist und Verbrennungsdruck, der von dem stabartigen Element (100) aufgenommen wird, aufgrund der Verschiebung des stabartigen Elements (100) erfasst,
wobei das elastische Element (330) Folgendes beinhaltet:
einen ersten rohrförmigen Abschnitt (332), welcher die Form eines Rohrs aufweist, das eine Seitenoberfläche des stabartigen Elements (100) umgibt und mit dem stabartigen Element (100) verbunden ist,
einen ersten gekrümmten Abschnitt (334), welcher konvex zur hinteren Endseite gekrümmt ist und sich von einem Abschnitt des ersten rohrförmigen Abschnitts (332) auf der hinteren Endseite radial nach außen erstreckt,
einen zweiten gekrümmten Abschnitt (336), welcher konvex zur vorderen Endseite gekrümmt ist und sich von einem Abschnitt des ersten gekrümmten Abschnitts (334) auf einer Außenumfangsfläche davon radial nach außen erstreckt, und
einen zweiten rohrförmigen Abschnitt (338), welcher die Form eines Rohrs aufweist, das mit einem Abschnitt des zweiten gekrümmten Abschnitts (336) auf einer Außenumfangsfläche davon verbunden ist und mit dem Gehäuse (500) verbunden ist,
wobei das Gehäuse (500) einen vorderen Endabschnitt (510) beinhaltet, welcher den Öffnungsabschnitt (512) bildet und zumindest einen Abschnitt des ersten rohrförmigen Abschnitts (332) des elastischen Elements (330), den ersten gekrümmten Abschnitt (334) davon, den zweiten gekrümmten Abschnitt (336) davon, und zumindest einen Abschnitt des zweiten rohrförmigen Abschnitts (338) davon beherbergt, und einen Spalt (GP) zwischen dem vorderen Endabschnitt (510) und zumindest einem Abschnitt einer Außenoberfläche des zweiten rohrförmigen Abschnitts (338) bildet, und
wobei der Verbrennungsdrucksensor zudem einen Wandabschnitt (310, 314I) umfasst, welcher im vorderen Endabschnitt (510) angeordnet ist, um auf der vorderen Endseite des zweiten gekrümmten Abschnitts (336) angeordnet zu sein und nur mit dem stabartigen Element (100) oder dem vorderen Endabschnitt (510) des Gehäuses (500) verbunden ist;
**dadurch gekennzeichnet, dass**: der Wandabschnitt (310, 314I) in axialer Richtung gesehen zumindest einen Abschnitt des zweiten gekrümmten Abschnitts (336) überlappt.

2. Verbrennungsdrucksensor nach Anspruch 1, wobei der Wandabschnitt (310) in radialer Richtung des stabartigen Elements (100) aus einem Abschnitt der Seitenoberfläche des stabartigen Elements (100) nach außen herausragt, wobei der Abschnitt auf der vorderen Endseite des elastischen Elements (330) angeordnet ist, und der Wandabschnitt (310) den ersten rohrförmigen Abschnitt (332) des elastischen Elements (330), des ersten gekrümmten Abschnitts (334) davon, und zumindest einen Abschnitt des zweiten gekrümmten Abschnitts (336) davon in axialer Richtung gesehen überlappt.

3. Verbrennungsdrucksensor nach Anspruch 1, wobei der Wandabschnitt (310) aus dem ersten rohrförmigen Abschnitt (332) in radialer Richtung des stabartigen Elements (100) nach außen herausragt und den ersten gekrümmten Abschnitt (334) des elastischen Elements (330) und zumindest einen Abschnitt des zweiten gekrümmten Abschnitts (336) davon in axialer Richtung gesehen überlappt.

4. Verbrennungsdrucksensor nach einem der Ansprüche 1 bis 3, wobei der vordere Endabschnitt (510) einen ersten Abschnitt (521) hat, welcher den Öffnungsabschnitt (512) und einen zweiten Abschnitt (522) beinhaltet, der auf der hinteren Endseite des ersten Abschnitts (521) in axialer Richtung gebildet ist und einen größeren Innendurchmesser als der Öffnungsabschnitt (512) hat;
zumindest der zweite gekrümmte Abschnitt (336) und der zweite rohrförmige Abschnitt (338) des elastischen Elements (330) und ein radial äußerster Abschnitt (314) des Wandabschnitts (310), welcher zumindest einen Abschnitt des zweiten gekrümmten Abschnitts (336) in axialer Richtung gesehen überlappt, im zweiten Abschnitt (522) angeordnet sind; und
der radial äußerste Abschnitt (314) einen äußersten Durchmesser hat, der größer ist als der Innendurchmesser des Öffnungsabschnitts (512).

5. Verbrennungsdrucksensor nach einem der Ansprüche 1 bis 4, wobei der vordere Endabschnitt (510) eine vordere Endoberfläche hat, welche um den Öffnungsabschnitt (512) in axialer Richtung gesehen angeordnet ist, und die vordere Endoberfläche zumindest einen Abschnitt des zweiten gekrümmten Abschnitts (336) in axialer Richtung gesehen überlappt.

6. Verbrennungsdrucksensor nach einem der Ansprüche 1 bis 5, wobei der Wandabschnitt (310) den zweiten gekrümmten Abschnitt (336) in axialer Richtung gesehen vollständig überlappt.

7. Verbrennungsdrucksensor nach einem der Ansprüche 1 bis 6, wobei ein kürzester Abstand zwischen dem Wandabschnitt (310, 314I) und dem zweiten gekrümmten Abschnitt (336) größer als 0,0 mm aber nicht größer als 0,5 mm ist.

8. Verbrennungsdrucksensor nach einem der Ansprüche 1 bis 7, wobei der Wandabschnitt (310) ein anderes Element ist als das elastische Element (330).

9. Glühkerze, die einen Verbrennungsdrucksensor nach einem der vorstehenden Ansprüche beinhaltet und wobei das stabartige Element einen Heizabschnitt (100) umfasst, welcher bei Bestromung Wärme erzeugt.

## Revendications

1. Capteur de pression de combustion, comprenant :
un organe en forme de tige (100) s'étendant dans une direction axiale depuis un côté extrémité arrière vers un côté extrémité avant ;
un logement (500) qui a la forme d'un tube ayant une partie d'ouverture (512) sur le côté extrémité avant et loge au moins une partie de l'organe en forme de tige (100) ;
un organe élastique (330) qui est disposé dans le logement (500) afin de raccorder l'organe en forme de tige (100) et le logement (500) et se déforme élastiquement afin de permettre à l'organe en forme de tige (100) de se déplacer dans la direction axiale ; et
un élément capteur (375) qui est logé dans le logement (500) et détecte une pression de combustion reçue par l'organe en forme de tige (100) sur la base de déplacement de l'organe en forme de tige (100),
l'organe élastique (330) incluant :
une première partie tubulaire (332) qui a la forme d'un tube entourant une surface latérale de l'organe en forme de tige (100) et est jointe à l'organe en forme de tige (100),
une première partie incurvée (334) qui est incurvée pour être convexe vers le côté extrémité arrière et s'étend radialement vers l'extérieur à partir d'une partie de la première partie tubulaire (332) sur le côté extrémité arrière,
une seconde partie incurvée (336) qui est incurvée pour être convexe vers le côté extrémité avant et s'étend radialement vers l'extérieur à partir d'une partie de la première partie incurvée (334) sur un côté circonférentiel extérieur de celle-ci, et
une seconde partie tubulaire (338) qui a la forme d'un tube connecté à une partie de la seconde partie incurvée (336) sur un côté circonférentiel extérieur de celle-ci et est raccordée au logement (500),
dans lequel le logement (500) inclut une partie d'extrémité avant (510) qui constitue la partie d'ouverture (512), loge au moins une partie de la première partie tubulaire (332) de l'organe élastique (330), la première partie incurvée (334) de celle-ci, la seconde partie incurvée (336) de celle-ci, et au moins une partie de la seconde partie tubulaire (338) de celle-ci, et forme un espace (GP) entre la partie d'extrémité avant (510) et au moins une partie d'une surface extérieure de la seconde partie tubulaire (338), et
dans lequel le capteur de pression de combustion comprend en outre une partie paroi (310, 314I) qui est disposée à l'intérieur de la partie d'extrémité avant (510) pour être située sur le côté extrémité avant de la seconde partie incurvée (336) et est raccordée à seulement un de l'organe en forme de tige (100) ou de la partie d'extrémité avant (510) du logement (500) ;
**caractérisé en ce que** : la partie paroi (310, 314I) chevauche au moins une partie de la seconde partie incurvée (336) en vue en direction axiale.

2. Capteur de pression de combustion selon la revendication 1, dans lequel la partie paroi (310) fait saillie vers l'extérieur dans une direction radiale de l'organe en forme de tige (100) à partir d'une partie de la surface latérale de l'organe en forme de tige (100), la partie étant située sur le côté extrémité avant de l'organe élastique (330), et la partie paroi (310) chevauche la première partie tubulaire (332) de l'organe élastique (330), la première partie incurvée (334) de celui-ci, et au moins une partie de la seconde partie incurvée (336) de celui-ci en vue en direction axiale.

3. Capteur de pression de combustion selon la revendication 1, dans lequel la partie paroi (310) fait saillie vers l'extérieur dans une direction radiale de l'organe en forme de tige (100) à partir de la première partie tubulaire (332) et chevauche la première partie incurvée (334) de l'organe élastique (330) et au moins une partie de la seconde partie incurvée (336) de celui-ci en vue en direction axiale.

4. Capteur de pression de combustion selon l'une quelconque des revendications 1 à 3, dans lequel
la partie d'extrémité avant (510) a une première partie (521) incluant la partie d'ouverture (512) et une seconde partie (522) qui est formée sur le côté extrémité arrière de la première partie (521) dans la direction axiale et est plus grande en diamètre intérieur que la partie d'ouverture (512) ;
au moins la seconde partie incurvée (336) et la seconde partie tubulaire (338) de l'organe élastique (330) et une partie radialement la plus extérieure (314) de la partie paroi (310) qui chevauche au moins une partie de la seconde partie incurvée (336) en vue en direction axiale sont disposées dans la seconde partie (522) ; et
la partie radialement la plus extérieure (314) a un diamètre le plus extérieur supérieur au diamètre intérieur de la partie d'ouverture (512).

5. Capteur de pression de combustion selon l'une quelconque des revendications 1 à 4, dans lequel la partie d'extrémité avant (510) a une surface d'extrémité avant qui est située autour de la partie d'ouverture (512) en vue en direction axiale, et la surface d'extrémité avant chevauche au moins une partie de la seconde partie incurvée (336) en vue en direction axiale.

6. Capteur de pression de combustion selon l'une quelconque des revendications 1 à 5, dans lequel la partie paroi (310) chevauche la totalité de la seconde partie incurvée (336) en vue en direction axiale.

7. Capteur de pression de combustion selon l'une quelconque des revendications 1 à 6, dans lequel une distance la plus courte entre la partie paroi (310, 314I) et la seconde partie incurvée (336) est supérieure à 0,0 mm mais non supérieure à 0,5 mm

8. Capteur de pression de combustion selon l'une quelconque des revendications 1 à 7, dans lequel la partie paroi (310) est un organe différent de l'organe élastique (330).

9. Bougie de préchauffage, incluant un capteur de pression de combustion selon l'une quelconque des revendications précédentes et dans laquelle l'organe en forme de tige comprend une section chauffante (100) qui génère de la chaleur lors de la mise sous tension.
